(19) **Europäisches Patentamt**

**European Patent Office**

**Office européen des brevets**

(11) **EP 0 617 678 B1**

(12) **EUROPÄISCHE PATENTSCHRIFT**

(45) Veröffentlichungstag und Bekanntmachung des Hinweises auf die Patenterteilung:
**03.01.1996 Patentblatt 1996/01**

(21) Anmeldenummer: 93921815.2

(22) Anmeldetag: **12.10.1993**

(51) Int. Cl.$^6$: **B60T 8/00**

(86) Internationale Anmeldenummer: **PCT/DE93/00965**

(87) Internationale Veröffentlichungsnummer: **WO 94/10013 (11.05.1994 Gazette 1994/11)**

(54) **Antriebsschlupfregelverfahren**

Traction Control Method

Procédure de Contrôle d'Antipatinage

(84) Benannte Vertragsstaaten:
**DE FR GB**

(30) Priorität: **24.10.1992 DE 4236004**

(43) Veröffentlichungstag der Anmeldung:
**05.10.1994 Patentblatt 1994/40**

(73) Patentinhaber: **ROBERT BOSCH GMBH D-70442 Stuttgart (DE)**

(72) Erfinder:
• **SCHMITT, Johannes
  D-71706 Markgröningen (DE)**
• **DONATH, Ralf
  D-71254 Ditzingen (DE)**

(56) Entgegenhaltungen:
EP-A- 0 265 969            DE-A- 3 404 018
DE-A- 3 635 095           DE-A- 3 818 511
US-A- 4 946 015

## Beschreibung

### Stand der Technik

Antriebsschlupfregelsysteme mit den Merkmalen des Oberbegriffs des Anspruchs 1 sind z.B. aus DE-A1 36 34 240 und DE-A-3 635 095 bekannt.

Aus der DE-A-3 635 095 ist ein Antriebsschlupfregelverfahren bekannt, das aus dem Radverhalten ein Überschußmoment berechnet und das Antriebsmoment entsprechend reduziert. Das Verfahren kann unwirksam gemacht werden, um die Gefahr eines Motorabwürgens zu verhindern.

### Vorteile der Erfindung

Der durch die Erfindung gemäß dem Kennzeichen des Anspruchs 1 erzielte antriebsproportionale Bremsdruckverlauf vermeidet einen schlupfbezogenen überhöhten Bremsdruck, der den Motor abwürgen kann. Bei der Anwendung der Erfindung kann ggf. auf eine Beeinflussung des Motormoments verzichtet werden.

### Figurenbeschreibung

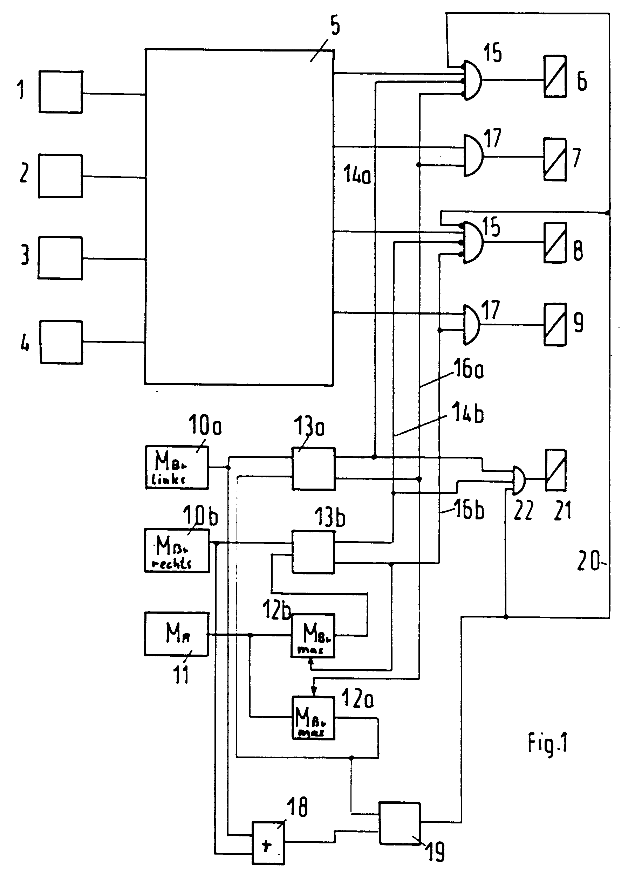

Anhand der Zeichnung wird ein Ausführungsbeispiel der Erfindung beschrieben. In der Figur 1 der Zeichnung sind den nicht angetriebenen Rädern eines Fahrzeugs zugeordnete Geschwindigkeitssensoren mit 1 und 2, den angetriebenen Rädern zugeordneten Sensoren mit 3 und 4 bezeichnet. Ein Steuergerät 5 erzeugt aus den Signalen der Sensoren 1 bis 4 bei Durchdrehneigung der angetriebenen Räder Bremsdrucksteuersignale, die den Radbremsen der angetriebenen Räder zugeordneten Einlaßventilen 6 und 8 und Auslaßventilen 7 und 9 zugeführt werden. Ist kein Ventil angesteuert, wird der Druck konstant gehalten, wird ein Einlaßventil 6 oder 8 angesteuert, wird eine Druckquelle an eine Radbremse angeschaltet, werden ein Einlaß- und ein Auslaßventil angesteuert erfolgt Druckabbau an der Radbremse.

Um zu vermeiden, daß ein zu hoher Bremsdruck eingesteuert wird und der Motor durch die Antriebsschlupfregelung abgewürgt wird, wird die jetzt zu beschreibende Anordnung vorgesehen. In Rechenschaltungen 10a und 10b werden aus einer fahrzeugspezifischen Konstanten K und den ermittelten Anzahlen von Druckauf- und Abbaupulsen P die Bremsmomente $M_{Br}$ für die beiden Räder ermittelt (entsprechend DE 41 23 783 A1). Entsprechend ermittelt eine Rechenschaltung 11 aus den Größen Motordrehzahl, Getriebeübersetzung, Drosselklappenwinkel bzw. Massenliefergrad und das Antriebsmoment $M_A$.

Die entsprechenden Beziehungen lauten

$M_{mot}$ ermittelt aus einem Kennfeld

$$M_A = M_{mot} \times i_{ges} \times \eta - \Theta_{ges} \times w$$

$$M_{Br} = \rho \times A_w \times r = P \times k$$

Hiermit bedeuten $A_w$ wirksame Fläche, r wirksamer Radius, P Druck, $\Theta_{ges}$ Trägheitsmoment des Antriebsstranges, w Winkelbeschleunigung, $\eta$ Wirkungsgrad (z.B. 0,8).

Das Bremsmoment darf das Antriebsmoment nicht übersteigen. Somit kann ein maximaler Bremsmomentenverlauf $M_{Br\,max}$ bestimmt werden, der bei der Leerlaufdrehzahl kein Bremsmoment zuläßt und mit ansteigendem Antriebsmoment eine Erhöhung des Bremsmoments erlaubt.

Der maximale Bremsdruck wird erst bei einem Antiebsmoment erreicht, das zum Anfahren an einer ermittelten Steigung bzw. mit einer entsprechenden Beschleunigung benötigt wird. Dieser maximale Bremsdruck $M_{Br\,max}$ ist wie folgt definiert:

$$M_{Br\,max} = \frac{M_A}{K_2} - K_1$$

Hierbei sind $K_1$ und $K_2$ Konstante; $K_1$ hat einen Wert, der einem an Steigungen ASR-typischen auftretenden Antriebsmoment entspricht der sicherstellen soll, daß mehr Antriebsmoment als Bremsmoment vorliegt (z.B. 200) und bei select-high-Betrieb einen anderen Wert annimmt (Sperrdifferentialfunktion); $K_2$ bestimmt den Grad der Bremsdruckzunahme und wird gang- und motorspezifisch gewählt und ist z.B. 5.

Der oben erläuterte empirisch ermittelte Verlauf von $M_{Br\,max}$ ist in Blöcken 12a und 12b gespeichert, d.h. die Blöcke 12 geben das für das jeweilige Antriebsmoment $M_A$ gültige maximale Bremsmoment $M_{Br\,max}$ ab. In Vergleichern 13a und 13b werden die ermittelten Bremsmomente $M_{Br}$ mit dem maximalen Bremsmoment $M_{Br\,max}$ verglichen und es wird ein Ausgangssignal auf einer der Leitungen 14a und 14b erzeugt, wenn $M_{Br}$ eines der Räder den Wert von $M_{Br\,max}$ erreicht. Damit wird das entsprechende Und-Gatter 15 gesperrt und der erreichte Druck wird gehalten.

Überschreitet das Bremsmoment $M_{Br}$ das maximale Bremsmoment, weil z.B. $M_{Br\,max}$ kleiner wird, so wird zusätzlich ein Signal auf einer der Leitungen 16a oder 16b erzeugt, das über Oder-Gatter 17 das entsprechende Auslaßventil 7 oder 9 ansteuert und damit Druck abbaut. Da mit dem Ausgangssignal auf Leitung 16a oder 16b auch der Block 12a oder 12b angesteuert wird, der dann ein Ausgangssignal $M_{Br\,max} - K_3$ erzeugt, wird Druck über die Grenze $M_{Br\,max}$ hinaus entsprechend der Wahl der Konstanten $K_3$ abgebaut. Die Konstante $K_3$ erzeugt also eine Hysterese und vermindert Schwingungen und Pendelschaltungen (z.B. 2). Mit Erreichen des Werts $M_{br\,max} - K_3$ kann dann vom Steuergerät 5 her wieder Druckaufbau bewirkt werden.

Die bis jetzt beschriebene Regelung ist wirksam, wenn select high-Betrieb herrscht, d.h., wenn ein Rad durchdrehen will ($\mu$-Split). Drohen beide Räder durchzudrehen (select-low), so wird das Bremsmoment an beiden Rädern begrenzt. Hierzu werden die Bremsmomente der Blöcke 10a und 10b in einem Block 18 addiert und die Summe in einem Vergleicher mit dem maximal möglichen Bremsmoment $M_{Brmax}$ verglichen. Will die Summe dieses maximale Moment überschreiten, dann wird über die Leitung 20 weiterer Druckaufbau an beiden Rädern verhindert. Auch hier wird wie für select high gezeigt, über einem zweiten Ausgang des Vergleichers 19 Druck abgebaut, wenn $M_{Brmax}$ - $K_3$ unterschritten wird. Dies ist in Figur 1 der Einfachheit halber nicht gezeigt.

Alternativ oder zusätzlich kann man, wenn an einer der Bremsen das maximal zulässige Bremsmoment erreicht wird, oder wenn die Bremsmomentsumme dieses Moment erreicht, das Motormoment erhöhen. Dies ist durch ein Stellglied 21 mit vorgeschaltetem Oder-Gatter 22 angedeutet. Man kann z.B. bei select-high nur das Motormoment anheben und bei select low das Bremsmoment begrenzen.

In den Gliedern 12a und 12b kann ein Zeitglied enthalten sein, das das zulässige $M_{Brmax}$ nach einer Zeit absenkt, um die Bremse zu schonen. Es ist auch möglich bei der Berechnung von $M_{Brmax}$ einen gewichtenden Faktor eingehen zu lassen, der sich aus dem Verhältnis der beiden Regelabweichungen BRA (links/rechts) wie folgt berechnet:

$$F = \frac{BRAx}{BRAx + BRAy} \qquad BRAx > BRAy$$

Günstigerweise wird ab einer Geschwindigkeit von z.B. 35 km/h und/oder von z.B. 15 km/h und Kurvenfahrt nur noch select low-Regelung zugelassen.

Günstigerweise wird das Motormoment nur angehoben, wenn an einem Rad auf Druck p = 0 bar begrenzt.

## Patentansprüche

1. Antriebsschlupfregelverfahren (ASR), bei dem bei Auftreten von Antriebsschlupf Bremsdruck an den angetriebenen Rädern eingesteuert wird, dadurch gekennzeichnet, daß das Antriebsmoment $M_A$ und das Bremsmoment $M_{Br}$ an den angetriebenen Rädern ermittelt wird und daß die durch das ASR aufgebrachten Bremsmomente durch einen maximal zulässigen Bremsmomentenverlauf $M_{Br\ max}$ begrenzt sind, der unterhalb des Motornullmoments 0 ist und mit steigendem Antriebsmoment anwächst und/oder daß mit Überschreiten eines vorgegebenen von dem Antriebsmoment abhängigen Bremsmomentenverlaufs das Antriebsmoment $M_A$ erhöht wird.

2. Antriebsschlupfregelverfahren nach Anspruch 1, dadurch gekennzeichnet, daß bei einem über dem maximalen Bremsmoment liegenden Bremsmoment Druck an den Radbremsen abgebaut wird bis ein Wert $M_{Br\ max}$ - $K_3$ erreicht ist, wobei $K_3$ ein konstanter Wert ist.

3. Antriebsschlupfregelverfahren nach Anspruch 1 oder 2, dadurch gekennzeichnet, daß die Summe der Bremsmomente gebildet wird und daß bei Überschreiten von $M_{Brmax}$ durch diese Summe eine Begrenzung der Bremsmomente an beiden Rädern erfolgt und/oder das Motormoment angehoben wird.

4. Antriebsschlupfregelverfahren nach einem der Ansprüche 1 bis 3, dadurch gekennzeichnet, daß bei Erreichen des maximalen Bremsmoments durch das Bremsmoment eines Rads das Motormoment angehoben wird und bei Erreichen des maximalen Bremsmoments durch die Summe das Bremsmoment begrenzt wird.

5. Antriebsschlupfregelverfahren nach einem der Ansprüche 1 bis 4, dadurch gekennzeichnet, daß das maximale Bremsmoment zeitabhängig verkleinert wird.

6. Antriebsschlupfregelverfahren nach einem der Ansprüche 1 bis 5, dadurch gekennzeichnet, daß die Begrenzung und/oder die Anhebung nur im Anfahrbereich (z. B. bis 35 km/h) wirksam ist.

7. Antriebsschlupfregelverfahren nach einem der Ansprüche 1 bis 6, dadurch gekennzeichnet, daß bei der Berechnung von $M_{Brmax}$ ein Faktor berücksichtigt wird, der vom Verhältnis der Regelabweichungen bei den Antriebsrädern abhängig ist.

8. Antriebsschlupfregelverfahren nach Anspruch 4, dadurch gekennzeichnet, daß das Motormoment nur angehoben wird, wenn an einem Rad kein Druck eingesteuert ist.

9. Antriebsschlupfregelverfahren nach Anspruch 1, dadurch gekennzeichnet, daß das maximal zulässige Bremsmoment nach Maßgabe der Gleichung

$$M_{Brmax} = \frac{M_A}{K_2} - K_1$$

ermittelt wird, wobei $K_1$ und $K_2$ konstant sind.

10. Antriebsschlupfregelverfahren nach Anspruch 9, dadurch gekennzeichnet, daß die Konstante $K_1$ und/oder die Konstante $K_2$ zusätzlich mit der Fahrbahnsteigung variiert und diese über Neigungssensor/Beschleunigungssensor bzw. über Motorwiderstandsmomente ermittelt wird.

## Claims

1. Drive-slip control method (ASR) in which, on the appearance of drive-slip, brake pressure is fed in at the driven wheels, characterized in that the drive torque $M_A$ and the braking torque $M_{Br}$ is determined at the driven wheels and in that the braking torques produced by the ASR are limited by a maximum permissible braking torque variation $M_{Br\ max}$ which is 0 below the engine zero torque and increases with increasing drive torque, and/or in that the drive torque is increased when a specified braking torque variation dependent on the drive torque $M_A$ is exceeded.

2. Drive-slip control method according to Claim 1, characterized in that in the case of a braking torque located above the maximum braking torque, pressure is reduced at the wheel brakes until a value $M_{Br\ max} - K_3$ is reached, $K_3$ being a constant value.

3. Drive-slip control method according to Claim 1 or 2, characterized in that the sum of the braking torques is formed and in that, when $M_{Br\ max}$ is exceeded by this sum, limitation of the braking torques at both wheels takes place and/or the engine torque is increased.

4. Drive-slip control method according to one of Claims 1 to 3, characterized in that when the braking torque of one wheel reaches the maximum braking torque, the engine torque is increased and, when the sum reaches the maximum braking torque, the braking torque is limited.

5. Drive-slip control method according to one of Claims 1 to 4, characterized in that the maximum braking torque is reduced as a function of time.

6. Drive-slip control method according to one of Claims 1 to 5, characterized in that the limiting and/or the raising is only effective in the drive-away range (for example up to 35 km/h).

7. Drive-slip control method according to one of Claims 1 to 6, characterized in that when $M_{Br\ max}$ is calculated, a factor is taken into account which depends on the ratio of the control deviations at the driven wheels.

8. Drive-slip control method according to Claim 4, characterized in that the engine torque is only raised when no pressure is fed in at a wheel.

9. Drive-slip control method according to Claim 1, characterized in that the maximum permissible braking torque is determined in accordance with the equation

$$M_{Br\ max} = \frac{M_A}{K_2} - K_1$$

where $K_1$ and $K_2$ are constant.

10. Drive-slip control method according to Claim 9, characterized in that the constant $K_1$ and/or the constant $K_2$ additionally varies with the roadway slope and the latter is determined by means of a slope sensor/acceleration sensor or by means of engine drag torques.

**Revendications**

1. Procédé de régulation antipatinage (ASR) selon lequel, lorsque se produit du patinage à l'entraînement, on commande la pression de freinage sur les roues motrices, procédé caractérisé en ce qu'on détermine le couple moteur ($M_A$) et le couple de freinage ($M_{Br}$) des roues motrices et on limite les couples de freinage appliqués par le système (ASR) par un profil de couple de freinage maximum autorisé ($M_{Br\ max}$), qui est nul en dessous du couple moteur nul et qui augmente avec l'augmentation du couple moteur et/ou lors du dépassement d'un profil de couple de freinage prédéterminé, dépendant du couple moteur on augmente le couple moteur ($M_A$).

2. Procédé de régulation antipatinage à l'entraînement selon la revendication 1, caractérisé en ce que pour un couple de freinage dépassant le couple de freinage maximum, on diminue la pression des freins de roue jusqu'à atteindre une valeur ($M_{Br\ max} - K_3$), $K_3$ étant une constante.

3. Procédé de régulation du patinage à l'entraînement, selon les revendications 1 ou 2, caractérisé en ce qu'on forme la somme des couples de freinage et en cas de dépassement par cette somme de ($M_{Br\ max}$), on limite les couples de freinage des deux roues et/ou on augmente le couple moteur.

4. Procédé de régulation du patinage à l'entraînement selon l'une des revendications 1 à 3, caractérisé en ce que lorsque le couple de freinage d'une roue atteint le couple de freinage maximum, on augmente le couple moteur et on limite le couple de freinage lorsque la somme des couples de freinage atteint le couple de freinage maximum.

5. Procédé de régulation du patinage à l'entraînement selon l'une des revendications 1 à 4, caractérisé en ce qu'on diminue le couple de freinage maximum en fonction du temps.

6. Procédé de régulation du patinage à l'entraînement selon l'une des revendications 1 à 5, caractérisé en ce que la limitation et/ou le relèvement n'est actif que dans la plage de démarrage (par exemple jusqu'à 35 km/h).

7. Procédé de régulation du patinage à l'entraînement selon l'une des revendications 1 à 6, caractérisé en ce que lorsqu'on calcule ($M_{Br\ max}$), on tient compte d'un coefficient dépendant du rapport des déviations de régulation au niveau des roues motrices.

8. Procédé de régulation du patinage à l'entraînement selon la revendication 4, caractérisé en ce qu'on augmente le couple moteur seulement lorsqu'aucune pression n'est commandée à une roue.

9. Procédé de régulation du patinage à l'entraînement selon la revendication 1, caractérisé en ce qu'on détermine le couple de freinage maximum autorisé selon l'équation:

$$M_{Br\,max} = \frac{M_A}{K_2} - K_1$$

dans laquelle $K_1$ et $K_2$ sont des constantes.

10. Procédé de régulation du patinage à l'entraînement selon la revendication 9, caractérisé en ce que la constante $K_1$ et/ou la constante $K_2$ varient en outre avec la pente de la trajectoire et celle-ci est déterminée par des capteurs d'inclinaison/capteurs d'accélération ou par le couple résistant au moteur.

Fig.1